# EUROPEAN PATENT APPLICATION

(11) **EP 4 329 387 A1**
(43) Date of publication of application: **28.02.2024**
(21) Application number: 22192101.8
(22) Date of filing: 25.08.2022
(51) Int. Cl.: H04W 52/36

(54) **TRANSMISSION POWER CONTROL AT A RADIO TERMINAL**

(71) Applicant: Nokia Technologies Oy, 02610 Espoo (FI)
(72) Inventor: SVENDSEN, Simon, Aalborg (DK); ROM, Christian, Aalborg (DK); OLESEN, Poul, Støvring (DK); BLÜCHER BRINK, Stig, Aalborg Øst (DK)
(74) Representative: Nokia EPO representatives

(57) **Abstract**

An apparatus comprising:
at least one processor; and
at least one memory including computer program code the at least one memory and the computer program code configured to, with the at least one processor, cause the apparatus at least to control:
receiving scheduling information for uplink transmission;
performing at least one scheduled uplink transmission according to the scheduling information; controlling content of a power headroom report in dependence upon detection of a reflection of the scheduled uplink transmission; and.
transmitting the power headroom report having content controlled in dependence upon detection of the reflection of the scheduled uplink transmission.

## Description

### TECHNOLOGICAL FIELD

Examples of the disclosure relate to uplink power control at a radio terminal.

### BACKGROUND

The maximum allowed transmitted radiated power from a handheld device operating at higher frequencies e.g. > 6GHz, for example >24GHz (3GPP FR2 frequencies), is regulated.

Regulatory bodies include, for example, the INTERNATIONAL COMMISSION ON NON-IONIZING RADIATION PROTECTION (ICNIRP) which produce guidelines. These or similar guidelines then influence national laws and radio telecommunication standards such as, for example, third generation partnership (3GPP) standards.

A handheld device is only allowed to transmit with high power, if no human tissue (near the antenna used for transmission) will be exposed to a Power Density (PD) (or other measure) higher than a safety threshold.

If would be desirable for a hand held transmitter device to be able to detect a presense of human tissue.

### BRIEF SUMMARY

According to various, but not necessarily all, examples there is provided an apparatus comprising:
at least one processor; and
at least one memory including computer program code the at least one memory and the computer program code configured to, with the at least one processor, cause the apparatus at least to control:
   receiving scheduling information for uplink transmission;
   performing at least one scheduled uplink transmission according to the scheduling information; controlling content of a power headroom report in dependence upon detection of a reflection of the scheduled uplink transmission; and.
   transmitting the power headroom report having content controlled in dependence upon detection of the reflection of the scheduled uplink transmission.

In some but not necessarily all examples, the apparatus comprises:
one or more first antennas and
at least a second antenna different to the one or more first antennas,
wherein the apparatus is configured to:
   perform the uplink transmission according to the scheduling information from the one or more first antennas;
   detect at the second antenna reflection of the uplink transmission, transmitted according to the scheduling information, and
   update the power headroom Report in dependence upon detecting reflection of the uplink transmission.

In some but not necessarily all examples, the power headroom report is configured to indicate an absence of a maximum permissible exposure event trigger in response to determination that no reflected version of the scheduled and transmitted uplink transmission is detected and is configured to indicate an M maximum permissible exposure event trigger in response to determination that a reflected version of the scheduled and transmitted uplink transmission is detected.

In some but not necessarily all examples, the apparatus is configured to performing at least one uplink transmission according to the scheduling information at a maximum transmit power and is configured to transmit a power headroom report with 0 dB power headroom and no maximum permissible exposure event trigger in response to determination that no reflected version of the scheduled and transmitted uplink transmission is detected at the apparatus and is configured to transmit a power headroom report with an maximum permissible exposure event trigger in response to determination that a reflected version of the scheduled and transmitted uplink transmission is detected at the apparatus.

In some but not necessarily all examples, the apparatus is configured to detect reflection of the uplink transmission within a time-limited window positioned at a time dependent upon a transmission time of the uplink transmission.

In some but not necessarily all examples, the apparatus is configured to:
determine an expected received signal at a second antenna in dependence upon the uplink transmission, according to the scheduling information, in absence of proximal reflection;
determine an actual received signal at the second antenna in dependence upon the uplink transmission, according to the scheduling information; and compare the expected signal and the received signal to generate a trigger.

In some but not necessarily all examples, the comparison of the expected signal and the received signal is dependent upon amplitude difference between the expected signal and the received signal and is dependent upon phase difference between the expected signal and the received signal.

In some but not necessarily all examples, the apparatus is configured to compare the expected signal and the received signal in the time domain.

In some but not necessarily all examples, the apparatus is configured to determine an expected signal at the second antenna in dependence upon the uplink transmission, according to the scheduling information, in absence of proximal reflection by applying a predetermined transfer function to the uplink transmission.

In some but not necessarily all examples, the apparatus is configured to measure the transfer function during a calibration process.

In some but not necessarily all examples, the transmitted power headroom report is configured to indicate a maximum permissible exposure event trigger when, at a transmission time of the scheduled and transmitted uplink transmission, there is a proximal object present; configured not to indicate a maximum permissible exposure event trigger when, at the transmission time of the scheduled and transmitted uplink transmission, there is no proximal object present.

In some but not necessarily all examples, the apparatus is configured to reduce direct radio path transmission-reception between one or more first antennas used to perform the at least one uplink transmission according to the scheduling information and one or more second antennas, different to the one or more first antennas, used to perform detection of a reflection of the uplink transmission.

In some but not necessarily all examples, the apparatus is configured as user equipment, wherein a power headroom Report comprises, after detection of a reflection of the uplink transmission, a maximum permissible exposure indicator indicating that the configured power headroom report is a maximum permissible exposure Power Management Maximum Power Reduction (P-MPR) report and comprising an indication of a power backoff applied by the user equipment to meet maximum permissible exposure requirements.

According to various, but not necessarily all, examples there is provided a computer program comprising computer program instructions that when run by one or more processors of an apparatus control the apparatus to cause:
storing scheduling information for uplink transmission.
performing at least one scheduled uplink transmission according to the scheduling information;
controlling content of a power headroom report in dependence upon detection of a reflection of the scheduled uplink transmission; and
updating of the power headroom report having content controlled in dependence upon detection of the reflection of the scheduled uplink transmission.

According to various, but not necessarily all, examples there is provided a method comprising:
receiving scheduling information for uplink transmission;
performing at least one scheduled uplink transmission according to the scheduling information; controlling content of a power headroom report in dependence upon detection of a reflection of the scheduled uplink transmission; and.
updating the power headroom report having content controlled in dependence upon detection of the reflection of the scheduled uplink transmission.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example of the subject matter described herein;
FIG. 2A shows another example of the subject matter described herein;
FIG. 2B shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein;
FIG. 10 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the following description a class (or set) can be referenced using a reference number without a subscript index (e.g. 10) and a specific instance of the class (member of the set) can be referenced using the reference number with a numerical type subscript index (e.g. 10_1) and a non-specific instance of the class (member of the set) can be referenced using the reference number with a variable type subscript index (e.g. 10_i).

### DETAILED DESCRIPTION

The inventors have identified that in some examples using an antenna array used for transmission as a proximity detector has advantages because it integrates safety control with the transmission source.

However, there are a number of problems. There is phase variation (phase center offset) associated with a higher frequency antenna array when implemented on a hand-held device. Also, the detection distance is small. It could be inside the near field regions of the antenna array and require full duplex operation.

The inventors have realized that using a scheduled uplink transmission as a proximity detection reference signal is advantageous as it avoids a need for specially allocated gaps in uplink transmission for proximity detection.

The FIGs illustrate examples of an apparatus 10 comprising means for:
receiving scheduling information 12 for uplink transmission 14;
performing 31 at least one scheduled uplink transmission 14 according to the scheduling information 12;
controlling 42 content 146 of a power headroom report 16 in dependence upon detection of a reflection 11 of the scheduled uplink transmission 14; and
transmitting the power headroom report 16 having content 146 controlled in dependence upon detection of the reflection 11 of the scheduled uplink transmission 14.

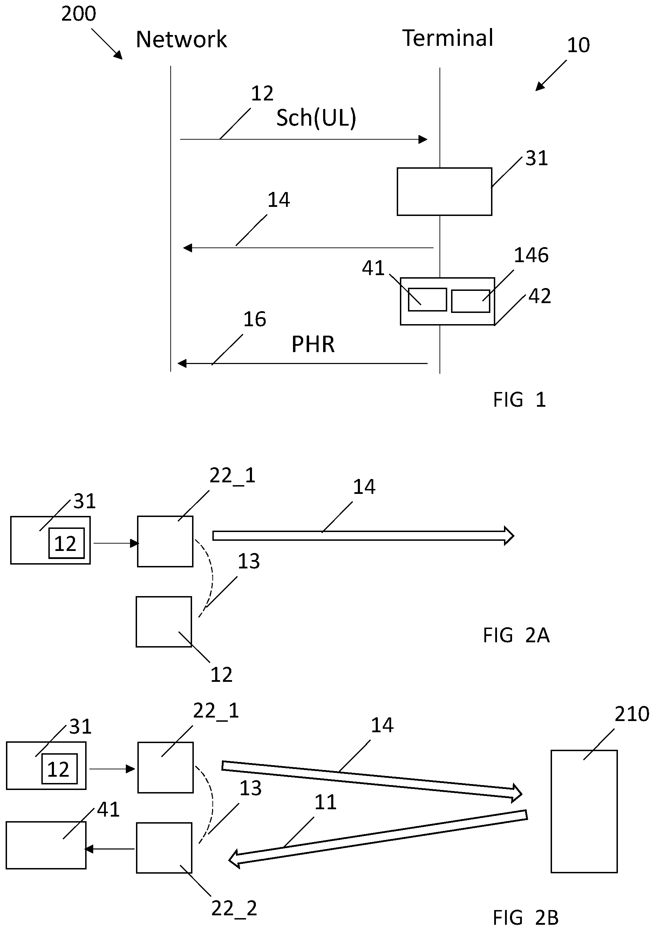

FIG 1 illustrates an example of an apparatus 10 for detecting a proximal object using a reflection 11 of a scheduled uplink transmission 14.

FIG 2A illustrates an example of the apparatus 10 performing a scheduled uplink transmission 14 in the absence of a proximal object 210. The apparatus performs 31 at least one scheduled uplink transmission 14 according to received scheduling information 12. There is no detection of a reflection 11 of the scheduled uplink transmission 14.

FIG 2B illustrates an example of the apparatus 10 performing a scheduled uplink transmission 14 in the presence of a proximal object 210. The apparatus performs 31 at least one scheduled uplink transmission 14 according to received scheduling information 12. There is detection 41 of a reflection 11 of the scheduled uplink transmission 14. As illustrated in FIG 1, the apparatus 10 controls content 146 of a power headroom report 16 to indicate a detection of this event (a maximum permissible exposure MPE event).

The apparatus 10 does not control content 146 of a power headroom report 16 to indicate a detection of this event when there is no detection of a reflection 11 of the scheduled uplink transmission 14.

The content 146 of a power headroom report 16 is therefore controlled in dependence upon detection of a reflection 11 of the scheduled uplink transmission 14.

Thus, referring back to FIG 1, the apparatus 10 is configured to:
receive scheduling information 12 for uplink transmission 14;
perform 31 at least one scheduled uplink transmission 14 according to the scheduling information 12;
control 42 content 146 of a power headroom report 16 in dependence upon detection of a reflection 11 of the scheduled uplink transmission 14; and
transmit the power headroom report 16 having content 146 controlled in dependence upon detection of the reflection 11 of the scheduled uplink transmission 14.

The transmission of a power headroom report 16 can for example be a network scheduled or requested transmission or an ad-hoc transmission. The transmission of a power headroom report 16 can for example be an ad-hoc transmission caused by detection of a reflection 11 of the scheduled uplink transmission 14.

Therefore, in some circumstances, a transmitted power headroom report 16 comprises an indicator that an MPE event has occurred (FIG 2B) and in some circumstances a transmitted power headroom report 16 does not comprise an indicator that an MPE event has occurred (FIG 2A).

The apparatus 10 can therefore use system allocated uplink transmission signals for static proximity detection.

As illustrated in FIGs 2A and 2B, in at least some examples, the apparatus 10 comprises one or more first antennas 22_1 and at least a second antenna 22_2 different to the one or more first antenna 22_1.

The apparatus 10 is configured to perform 31 the scheduled uplink transmission 14 according to the scheduling information 12 from the one or more first antennas 22_1. The apparatus 10 is configured to detect 41 at the second antenna 22_2 reflection 11 of the uplink transmission 14, transmitted according to the scheduling information 12.

The power headroom report 16 is configured to indicate an absence of a maximum permissible exposure (MPE) event trigger in response to determination that no reflected version of the scheduled and transmitted uplink transmission 14 is detected and is configured to indicate an MPE event trigger in response to determination that a reflected version of the scheduled and transmitted uplink transmission 14 is detected. In at least some examples, the indication of the MPE event trigger is activation of a MPE indicator in the power headroom report 16.

In at least some examples, the apparatus 10 is configured to perform 31 the at least one scheduled uplink transmission 14 at a maximum transmit power. In this example, the apparatus can be configured to transmit a power headroom report 16 with 0 dB power headroom and no MPE event trigger in response to determination that no reflected version of the scheduled and transmitted uplink transmission 14 is detected at the apparatus 10. In some examples, the apparatus 10 can be configured to transmit a power headroom report 16 with an MPE event trigger in response to determination that a reflected version of the scheduled and transmitted uplink transmission 14 is detected at the apparatus 10.

The coupling of energy from the scheduled uplink transmission 14 to the apparatus 10 for detection 41 occurs from a presence of a proximal object 210 where energy is transmitted from apparatus 10, reflected from an external proximal object and then the reflected energy is then received at the receiver of apparatus 10, but can also occur because of other coupling 13, for example coupling between the one or more (transmitter) first antennas 22_1 of the apparatus 10 and the (receiver) second antenna 22_2 of the apparatus 10. In at least some examples it can be desirable to differentiate coupling 13 from reflection 11.

In at least some examples, the apparatus 10 is configured to reduce direct radio path transmission-reception (coupling 13) between one or more first antennas 22_1 used to perform 31 the at least one scheduled uplink transmission 14 according to the scheduling information 12 and one or more second antennas 22_2, different to the one or more first antennas 22_1, used to perform detection of a reflection 11 of the uplink transmission 14.

Improved isolation makes it easier to detect the presence of the object 210 and will improve the accuracy of the proximity detection and can, in some examples, enable identification of the object as human tissue.

It will be appreciated from FIG 2B that the apparatus is configured to transmit and receive at the same time from different respective antennas 22_1, 22_2.

The creation and transmission of the power headroom report 16 in dependence upon detection of a reflection 11 of the scheduled uplink transmission 14 could be based on a delay of the reflected signal 11. However, using absolute delay values can in some circumstances lack accuracy because of a variation in phase center offset can be large in comparison to a distance to a proximal object 210. Using a relative comparison improves accuracy.

Relative measurement is possible, where the current conditions of the near environment surrounding the antennas used for the scheduled uplink transmission and detection of its reflection are measured and compared to a reference e.g., a stored reference Free Space (FS) measurement.

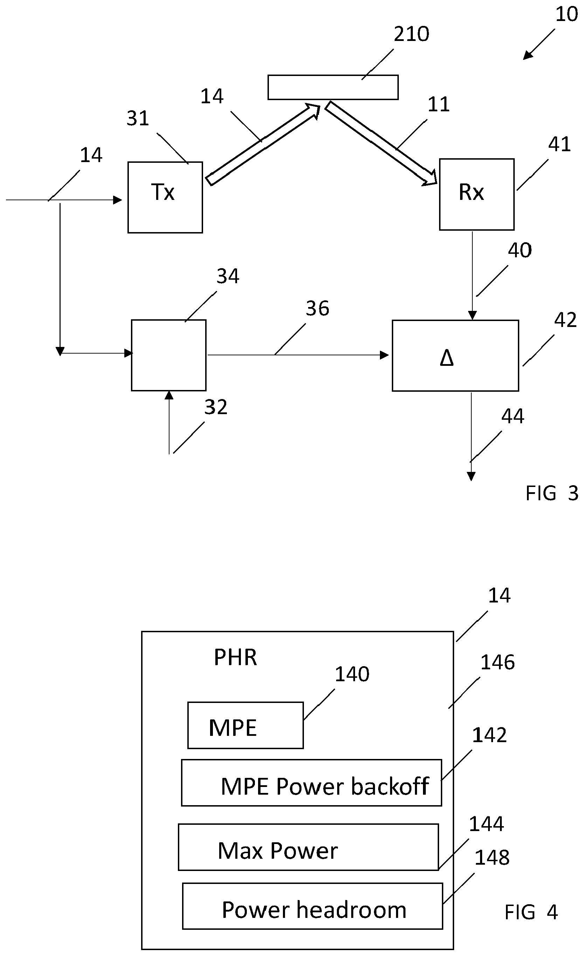

As illustrated in FIG 3, in at least some examples, the apparatus 10 is configured to determine, as a reference, an expected received signal 36 in absence (or presence) of proximal reflection 11. The apparatus 10 is configured to determine an actual received signal 40.

The apparatus 10 is configured to compare the reference 36 and the received signal 40 to generate a trigger 44 when there is a proximal object 210. The trigger 44 is used as a detection signal for a proximal object 210.

In some examples, the reference is the expected received signal 36 in absence of proximal reflection 11. This represents the received signal in FIG 2A; received in dependence upon the scheduled uplink transmission 14 in the absence of proximal reflection 11. It is dependent upon the coupling 13.

The received signal 40 in the presence of proximal reflection 11 is the received signal in FIG 2B; received in dependence upon the scheduled uplink transmission 14 in the presence of proximal reflection 11. It is dependent upon the coupling 13 and the reflected signal 11.

The received signal 40 varies in magnitude and phase in comparison to the coupled signal 13. Either one or both of magnitude or phase can be measured to trigger an MPE event. However, greater accuracy is obtained by measuring both simultaneously.

Thus in at least some examples, the comparison 42 of the expected signal 36 and the received signal 40 is dependent upon amplitude difference between the expected signal 36 and the received signal 40 and is dependent upon phase difference between the expected signal 36 and the received signal 40.

The comparison can be performed in the time domain and/or the frequency domain. In some but not necessarily all examples, the apparatus 10 is configured to determine the expected signal in dependence upon the scheduled uplink transmission 14 by applying 34 a predetermined transfer function 32 to the uplink transmission 14.

Depending upon implementation this transfer function can represent a channel from transmitter to receiver. It is simpler to implement this when the transfer function represents a channel from transmitter to receiver in absence of proximal reflection 11. This will be assumed in the following.

In at least some examples, the apparatus is configured to measure the transfer function during a calibration process.

In at least some examples, the apparatus 10 measures and stores a Free Space Reference Transfer Function (FS-R-TF) from the transmission signal path to the reception signal path, for the antennas 22 when configured for proximity operation (the FS-R-TF can be stored as a Frequency and/or Time Domain).

The actual transmitted signal 14 can be convolved 34, for example in the digital time domain, with the stored FS-R-TF 32 and compared 42 with the received signal 40 of the reception path. If the difference between those two signals 36, 40 is larger than a given threshold, then this indicates that an object 210 is close to the antennas 22.

Multiple Transfer Functions 32 can be stored for different combinations of transmit antennas 22_1, beam array configurations, the frequency and bandwidth of the transmitted signal 14 and PA (Power Amplifier) power levels, both as a frequency and/or time domain version.

The FS-R-TF 32 for each array beam configuration can be stored for real time proximity detection.

In the frequency domain, a reflection causes different phase shifts for different subcarrier frequencies, depending on frequency. Data dependency can be eliminated by element-wise division per subcarrier by the known transmitted signal. Distance estimation can be transformed into spectral estimation of sinusoid(s) in additive white Gaussian noise.

In some but not necessarily all examples, the apparatus 10 is configured to compare 42 the expected signal 36 and the received signal 40 in the time domain.

In some but not necessarily all examples, the apparatus 10 is configured to detect reflection 11 of the uplink transmission 14 within a time-limited window positioned at a time dependent upon a transmission time of the uplink transmission 14. The time-limited window can, for example, be limited to 1ns (equivalent to 33 cm at 28GHz). The reception signal 40 is only evaluated in the 1ns window following the scheduled uplink transmission. Thus reflections 11 from an object 210 further away than 16.5 cm will not be detected.

The time-limited window can have only an upper boundary or have a lower boundary and an upper boundary. In at least some examples, the lower boundary is controlled to reduce noise. In at least some examples, the upper boundary is controlled to reduce noise.

In some but not necessarily all examples, the apparatus 10 is configured to detect reflection 11 of the uplink transmission 14 only after a threshold time after transmission time of the uplink transmission 14. The threshold time can be chosen to eliminate direct coupling signals between the one or more (transmitter) first antennas 22_1 of the apparatus 10 and the one or more (receiver) second antennas 22_2 of the apparatus 10. This prevents detection of direct coupling 13 and limits detection to reflection 11. The threshold can, for example, be T ns (equivalent to D cm at frequency F). The reception signal 40 is only evaluated after the threshold time T following the scheduled uplink transmission. Thus reflections 11 from an object 210 closer than D/2 cm will not be detected. If, for example, T=1/F, then D = c/F where c is the speed of light. When F is 28GHz, D is about 1cm. Thus reflections 11 from an object 210 closer than 5mm will not be detected. If the maximum separation distance S between the first antennas 22_1 and second antennas 22_2, then the threshold can be set to the maximum time for a signal to travel from the first antenna 22_1 to the second antenna 22_2.

In some but not necessarily all examples, the apparatus 10 is configured to indicate 44 an MPE event trigger when, at a transmission time of the scheduled and transmitted uplink transmission 14, there is a proximal object 210 present (FIG 2B) and configured not to indicate an MPE event trigger when, at the transmission time of the scheduled and transmitted uplink transmission 14, there is no proximal object 210 present.

In some but not necessarily all examples, the apparatus 10 is configured to indicate 44 an MPE event trigger only when, at a transmission time of the scheduled and transmitted uplink transmission 14, there is a proximal object 210 present. Thus, the apparatus 10 is configured not to indicate 44 an MPE event trigger when, at a time other than a transmission time of the scheduled and transmitted uplink transmission 14, there is no proximal object 210 present.

FIG 4 is one example of a power headroom report 16. The power headroom report 16 can be configured to indicate an absence of a maximum permissible exposure (MPE) event trigger 44 in response to determination that no reflected version 11 of the scheduled and transmitted uplink transmission 14 is detected and is configured to indicate an MPE event trigger 44 in response to determination that a reflected version 11 of the scheduled and transmitted uplink transmission 14 is detected.

The following description of a power headroom request 16 is based on the scenario where the apparatus 10 is user equipment. Furthermore, the user equipment 10 is configured to operate in accordance with current New Radio (NR) requirements as specified by 3GPP. However, the following description also describe features that can be used in other communication standards, protocols or technology.

Currently (although this may be subject to change) one example of a power headroom report comprises:
(i) a P-bit field used to indicate the MPE event. This is an MPE indicator 140;
(ii) a MPE field used to indicate the amount of MPE power reduction (P-MPR). This is a MPE backoff field 142 indicating the applied power backoff to meet (inter alia) MPE requirements;
(iii) a Pcmax field identifying the maximum transmitting power available for use. This is a maximum power field 144 indicating UE configured maximum output power;
(iv) a PH (Power Headroom) field which is used by the UE to indicate how much additional power amplification is available. This is a power headroom field 148;

The power headroom is the difference between the maximum transmitting power available for use (Pcmax) and the transmitting power in use. It indicates how much additional power amplification is available.

The Pcmax field is the maximum transmitting power available for use. It has been reduced by the power back-off. The maximum transmitting power can be reduced by an MPE event and/or other events/factors.

Currently a 2-bit MPE field is used by the UE to indicate the amount of MPE power reduction (P-MPR) as one of four intervals: 3dB to 6dB, 6dB to 9dB, 9 dB to 12 dB, and greater than 12 dB.

A power headroom of 0 dB means that the UE is transmitting at maximum power (Pcmax), a positive PH indicates that the UE has additional power available. A negative PH can indicate that the UE is transmitting with less power than required.

Thus the power headroom Report (PHR) comprises, after detection of a reflection 11 of the uplink transmission 14, an MPE indicator 140 indicating that the configured power headroom report 16 is an MPE Power Management Maximum Power Reduction (P-MPR) report and comprising an indication 142 of a power backoff applied by the user equipment 10 to meet maximum permissible exposure (MPE) requirements.

Controlling 42 content 146 of a power headroom report 16 in dependence upon detection of a reflection 11 of the scheduled uplink transmission 14 comprises controlling MPE content, for example content of the MPE indicator 140 (e.g. a P-bit field) and content of the indication 142 of a power backoff (e.g. MPE field).

The power headroom Report (PHR) additionally comprises a max power indicator 144 indicating a current maximum transmit power for the user equipment 10.

The power headroom report 16 (PHR) indicates a maximum transmission power 144 and a power headroom 148 between a current transmission power and the maximum transmission power 144.

As illustrated, the power headroom report 16 can comprise:
a power headroom field 148 indicating a parameterized power headroom level;
a maximum permissible exposure (MPE) indicator 140 to indicate MPE event reporting;
a maximum power field 144 indicating UE configured maximum output power;
a MPE backoff field 142 indicating the applied power backoff to meet (inter alia) MPE requirements.

The content 146 of the PHR 16 is dependent upon whether or not there has been an MPE event trigger 44. The value of the MPE indicator 140 is different depending upon whether there has or has not been an MPE event trigger 44.

The PHR 16 can be sent when no MPE event is triggered. The MPE reporting piggybacks on the existing, legacy power management signaling and can be controlled/requested by a network 200.

A first MPE indicator value (e.g., MPE bit value 0 or absent field) indicates an absence of a MPE event trigger 44. A second MPE indicator value (e.g., MPE bit value 1) indicates a MPE event trigger 44.

When MPE indicator has the second value the power headroom report 16 is an MPE Power Management Maximum Power Reduction (P-MPR) report. The power headroom report 16 comprises, in the MPE power backoff field 142, an indication of a power backoff applied by the user equipment 10 to meet maximum permissible exposure (MPE) requirements. The MPE P-MPR is the power backoff required to meet the MPE requirements.

A MPE P-MPR PHR is sent in dependence upon a MPE event trigger 44. However, the timing of sending the PHR 16 can be controlled by the network or can be ad-hoc.

The PHR 16 can, for example, be sent when a measured P-MPR applied to meet MPE requirements is equal to or larger than an mpe-Threshold for at least one activated Serving Cell since the last transmission of a PHR or the measured P-MPR applied to meet MPE requirements has changed more than phr-Tx-PowerFactorChange dB for at least one activated Serving Cell since the last transmission of a PHR due to the measured P-MPR applied to meet MPE requirements being equal to or larger than mpe-Threshold in this MAC entity.

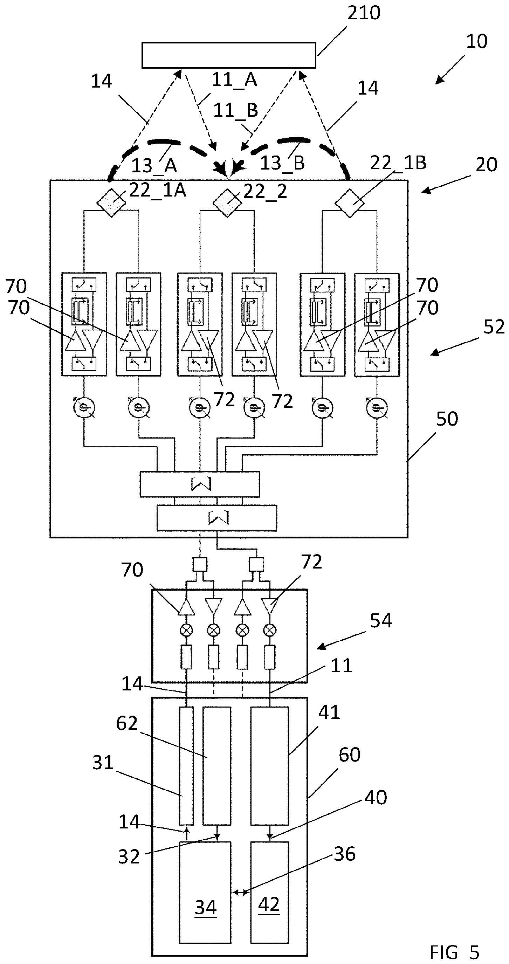

FIG 5 illustrates an example of the apparatus 10.

As previously described, the apparatus 10 is configured to perform the scheduled uplink transmission according to the scheduling information from the one or more first antennas 22_1 and the apparatus 10 is configured to detect at one or more second antennas 22_2 reflection of the uplink transmission, transmitted according to the scheduling information.

The antennas 22_1, 22_2 can be in any suitable arrangement where the antenna(s) 22_1 for transmission and the antenna(s) 22_2 for reception is physically distinct. The antenna(s) 22_1 for transmission can be antenna elements in the same array or different arrays. The antenna(s) 22_2 for reception can be antenna elements in the same array or different arrays. The antenna(s) 22_1 for transmission and the antenna(s) 22_2 for reception can be antenna elements in the same array or different arrays.

Referring to FIG 5, in this example, the apparatus 10 comprises an antenna array 20 comprising the antennas 22. The antenna array can, for example, be an antenna panel. The antennas 22 are distinct antenna elements of a single antenna array 20. The apparatus 10 in this example, comprises radio frequency circuitry 52 between the antenna array 20 and digital processing circuitry 60. The radio frequency circuitry 52 comprises frequency control circuitry 54 for direct conversion to or from radio frequencies and frequencies processable by analogue to digital converters of the digital processing circuitry 60. Multiple stage conversion to or from radio frequencies and frequencies processable by analogue to digital converters are also possible. In this example, the radio frequency circuitry 52 also comprises beam-forming circuitry 50 configured to weight signals associated with different antenna 22 with different weightings. The weights are phasors and apply a controlled gain and a controlled phase offset.

The FIG labels the transmission paths 70 of the scheduled transmitted signal 14 to the first antennas 22_1A, 22_1B. The FIG labels the reception path 72 of the received reflected signal 11 from the second antenna 22_2.

The apparatus 10 performs 31 at least one scheduled uplink transmission 14 according to received scheduling information 12. The scheduled uplink transmission 14 is transmitted simultaneously via the first antennas 22_1A, 22_1B.

There is detection 41 of reflections 11 of the scheduled uplink transmission 14. The scheduled uplink transmission 14 transmitted via the first antenna 22_1A is reflected and received as reflected signal 11_A at the second antenna 22_2. The scheduled uplink transmission 14 transmitted via the first antenna 22_1B is reflected and received as reflected signal 11_B at the second antenna 22_2.

The apparatus 10 controls the MPE content 146 of a power headroom report 16 to indicate a detection of a maximum permissible exposure MPE event.

The apparatus 10 does not control the MPE content 146 of a power headroom report 16 to indicate a detection of this event when there is no detection of a reflection 11 of the scheduled uplink transmission 14.

The MPE content 146 of a power headroom report 16 is therefore controlled in dependence upon detection of a reflection 11 of the scheduled uplink transmission 14. The MPE content 146 can comprise, for example content of the MPE indicator 140 (e.g. the P-bit field) and content of the indication 142 of a power backoff (e.g. MPE field).

Thus, referring to FIG 5, the apparatus 10 is configured to
receive scheduling information 12 for uplink transmission 14;
perform 31 at least one scheduled uplink transmission 14 according to the scheduling information 12;
control 42 content 146 of a power headroom report 16 in dependence upon detection of a reflection 11 of the scheduled uplink transmission 14; and
transmitting the power headroom report 16 having content 146 controlled in dependence upon detection of the reflection 11 of the scheduled uplink transmission 14.

The apparatus 10 can therefore use system allocated uplink transmission signals for proximity detection.

The apparatus 10 is configured to determine, as a reference, an expected received signal 36 in absence of proximal reflection 11 and is configured to determine an actual received signal 40.

The apparatus 10 is configured to compare the reference 36 and the received signal 40 to generate a trigger when there is a proximal object 210. The trigger is used as a detection signal for a proximal object 210.

The apparatus 10 is configured to determine the expected signal 36 in dependence upon the scheduled uplink transmission 14 by applying 34 a predetermined transfer function 32 to the uplink transmission 14.

The transfer function 32 is phase and amplitude dependent. Thus, the comparison 42 of the expected signal 36 and the received signal 40 is dependent upon amplitude difference between the expected signal 36 and the received signal 40 and is dependent upon phase difference between the expected signal 36 and the received signal 40.

In at least some examples, the apparatus 10 measures and stores 62 a Free Space Reference Transfer Functions (FS-R-TF) 32 from the transmission signal path to the reception signal dependent path, for the antennas 22 when configured for proximity operation. The actual transmitted signal 14 is convolved 34 with the stored FS-R-TF 32 and compared 42 with the received signal 40 of the reception path 72 in the time domain. If the difference between those two signals 36, 40 is larger than a given threshold, then this indicates that an object 210 is close to the antennas 22.

Multiple Transfer Functions can be stored 62 for different combinations of transmit antennas 22_1, beam array configurations, the frequency and bandwidth of the actual transmitted signal 14 and PA power levels, both as a frequency and/or time domain version.

The coupling of energy from the scheduled uplink transmission 14 to the apparatus for detection 41 occurs from a presence of a proximal object 210 but can also occur because of other coupling 13, for example coupling 13_A between the first antenna 22_1A and the (receiver) second antenna 22_2 and coupling 13_B between the first antenna 22_1B and the (receiver) second antenna 22_2.

In at least some examples it can be desirable to differentiate coupling 13 from reflection 11. This can, for example, be achieved by improving isolation between the one or more transmit antennas 22_1and the one or more receive antennas 22_2.

The apparatus 10 can be configured to reduce direct radio path transmission-reception (coupling 13) between one or more first antennas 22_1 used to perform the at least one uplink transmission 14 according to the scheduling information 12 and one or more second antennas 22_2, different to the one or more first antennas 22_1, used to perform detection of a reflection 11 of the uplink transmission 14.

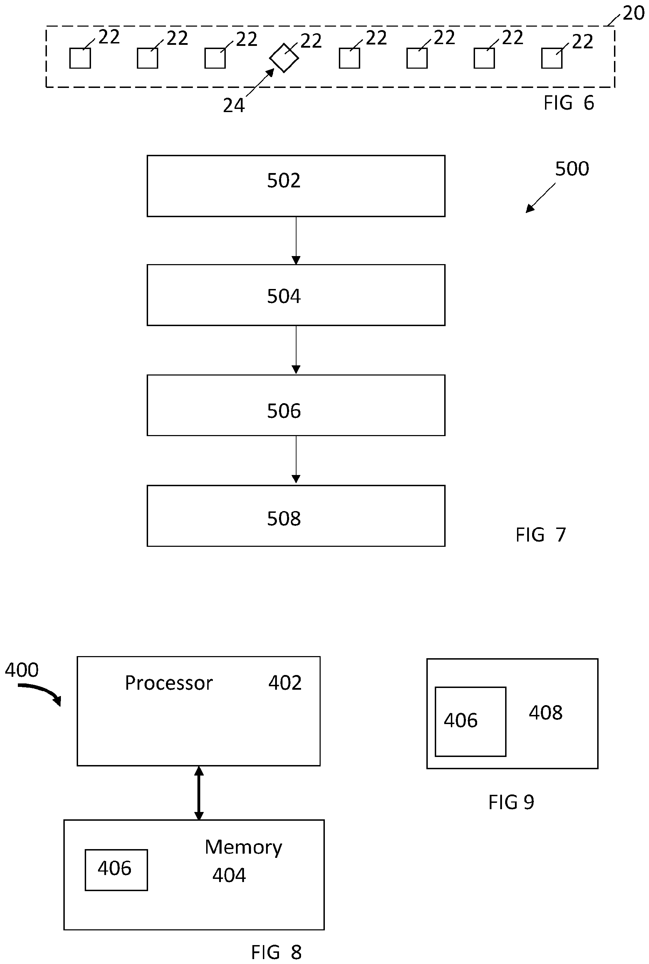

In the example illustrated in FIG 6, an antenna array comprises N antennas 22. One of the antennas 22, the modified antenna 24, has been modified to improve isolation from the other antennas 22. The modified antenna 24 can, for example, be used as a second antenna 22_2 for reception of transmitted scheduled uplink transmissions 14.

In this example, but not necessarily all examples, the antennas 22 are dual polarized. Each antenna 22 defines two orthogonal polarizations in the plane of the array 20. The modified antenna 24 is rotated, in the plane of the array 20, by 45° relative to the other antennas 22 such that its polarization vectors have maximum separation/isolation from the polarization vectors of the other antennas 22. This enables simultaneously high isolation of a single Tx port to two 45° rotated Rx feed points.

The two antenna feed points on the rotated antenna 24 are used for combined reception and the remaining 7 antenna feed points of the aligned antennas 22 are used for a combined (beam-formed) transmission signal 14.

The scheduled beam-formed transmission signal 14 is applied on the 7 aligned patches 22 in the array 20, while the received signal 11 is combined from both polarizations on the 45° rotated patch.

The rotation of the antenna 24 provides good isolation > 40 dB for boresight configuration of the Tx beam) from the combined beam-formed Tx signal to the combined Rx antenna feed points

Although use of an antenna 22_2 for reception rather than transmission will reduce the maximum gain of the antenna array 20, this need only occur periodically, for example with a periodicity of more than 100 ms.

FIG 7 illustrates an example of a method 500 for detecting a proximal object using a reflection 11 of a scheduled uplink transmission 14.

The method 500 comprises, at block 502, receiving scheduling information 12 for (uplink) transmission.

The method 500 comprises, at block 504, performing 31 at least one scheduled uplink transmission 14 according to the scheduling information 12.

The method 500 comprises, at block 506, controlling 42 content 146 of a power headroom report 16 in dependence upon detection of a reflection 11 of the scheduled uplink transmission 14.

The method 500 comprises, at block 508, transmitting the power headroom report 16 having content 146 controlled in dependence upon detection of the reflection 11 of the scheduled uplink transmission 14.

Fig 8 illustrates an example of a controller 400 suitable for use in an apparatus 10. Implementation of a controller 400 may be as controller circuitry. The controller 400 may be implemented in hardware alone, have certain aspects in software including firmware alone or can be a combination of hardware and software (including firmware).

As illustrated in Fig 8 the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 10 when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus 10 comprises:
at least one processor 402; and
at least one memory 404 including computer program code,
the at least one memory 404 and the computer program code configured to, with the at least one processor 402, cause the apparatus 10 at least to perform:
   storing scheduling information 12 for (uplink) transmission;
   performing 31 at least one scheduled uplink transmission 14 according to the scheduling information 12;
   controlling 42 content 146 of a power headroom report 16 in dependence upon detection of a reflection 11 of the scheduled uplink transmission 14; and
   transmission of the power headroom report 16 having content 146 controlled in dependence upon detection of the reflection 11 of the scheduled uplink transmission 14.

The apparatus 10 comprises:
at least one processor 402; and
at least one memory 404 including computer program code,
the at least one memory storing instructions that, when executed by the at least one processor 402, cause the apparatus at least to:
   receiving scheduling information 12 for (uplink) transmission;
   performing 31 at least one scheduled uplink transmission 14 according to the scheduling information 12;
   controlling 42 content 146 of a power headroom report 16 in dependence upon detection of a reflection 11 of the scheduled uplink transmission 14; and
   transmitting the power headroom report 16 having content 146 controlled in dependence upon detection of the reflection 11 of the scheduled uplink transmission 14.

As illustrated in Fig 9, the computer program 406 may arrive at the apparatus 10 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

Computer program instructions for causing an apparatus to perform at least the following or for performing at least the following:
storing scheduling information 12 for (uplink) transmission;
performing 31 at least one scheduled uplink transmission 14 according to the scheduling information 12;
controlling 42 content 146 of a power headroom report 16 in dependence upon detection of a reflection 11 of the scheduled uplink transmission 14; and
transmission of the power headroom report 16 having content 146 controlled in dependence upon detection of the reflection 11 of the scheduled uplink transmission 14.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

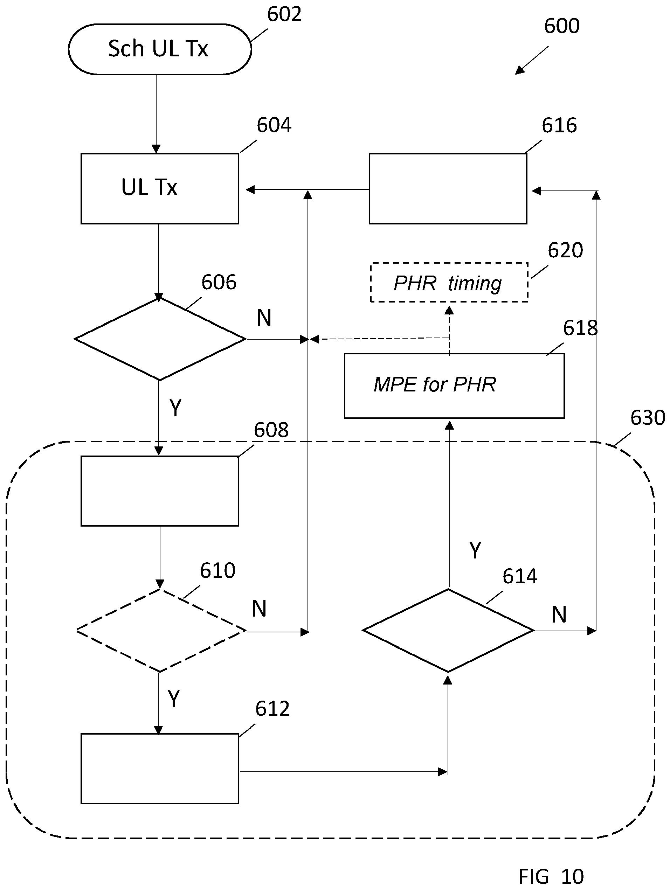

FIG 10 illustrates a particular use case in user equipment (UE) for, and not limited to, new radio (5G).

At block 602, the UE 10 is in a radio resource control (RRC) connected mode and is connected to a serving base station (e.g., gNB).

The UE 10 receives and stores scheduling information 12 transmitted in downlink from the network.

At block 604, the UE 10 waits for a next scheduled transmission.

At block 606, the UE 10 determines if proximity detection is needed. This decision can depend on a power amplifier level, allocated Physical Resource Block (PRB), a timer, etc..

At block 608, the UE 10 measures the transmission to reflection coupling for the antenna panel 20 when configured for proximity detection. This includes the reflected scheduled transmission signal, reflected signal 11, if present.

At block 610, the UE 10 determines whether or not the received signal 11 can be decoded. If yes, the method moves to block 612. If no, the method moves to block 604. This block is optional. It can be included to avoid false proximity detections if the UE 10 is disturbed by a random interference signal.

At block 612, the UE 10 convolves the scheduled Tx signal 14 with the appropriate stored time domain transfer function 32 (a time gating window of for example 1 ns can be utilized).

At block 614, a difference between the received coupled Tx signal 40 and the internally convolved Tx signal 36 is compared and evaluated for a given threshold. If the difference is outside the threshold (MPE event), the method moves to block 618. If the difference is inside the threshold (no MPE event), the method moves to block 616.

At block 618, object proximity is detected. The UE 10 will now initiate the MPE procedure and send a MPE event trigger in the Power Headroom Report (PHR) 16 to the network 100. This may or may not be sent immediately depending upon implementation. The timing of when the PHR 16 is sent is controlled at block 620.

After preparing a PHR 16 with a MPE event trigger at block 618, the UE can wait, at block 604, for the next scheduled transmission.

The MPE bit 140 is activated. The Pcmax value 144 is reduced with the indicated MPE Power Back-off value 142. The amount of MPE power back-off value is indicated in the MPE P_MPR report field 142 (two bits), as the Pcmax can be reduced by other factors than MPE.

At block 616, no object is detected. The apparatus 10 is in free space or object(s) is out of range of the apparatus 10. The UE 10 will either deactivate the MPE procedure, if activated, by removing the MPE bit in the PHR 16 or do nothing if the MPE procedure is not currently active.

The UE 10 will transmit a PHR 16 whenever it is requested by the network 100, whether or not an object 210 (reflection 11) is detected or not. If an object is detected, the MPE bit in the PHR 16 is activated. If an object is not detected, the MPE bit in the PHR 16 is not activated. The PHR 16 includes a bit for MPE activation.

The collection 630 of blocks detects reflection 11 of the scheduled uplink transmission 14.

The UE 10 thus comprises means for:
receiving scheduling information 12 for uplink transmission 14;
performing 31 at least one scheduled uplink transmission 14 according to the scheduling information 12;
controlling 42 content 146 of a power headroom report 16 in dependence upon transmitting the power headroom report 16 having content 146 controlled in dependence upon detection of the reflection 11 of the scheduled uplink transmission 14.

An increase in isolation between the transmit and receive antennas 22_1, 22_2 and/or and higher-bit analog to digital converter can be used to detect lower signal levels and hence increase distance detection. Signal levels will be reduced by approximately 6 dB when doubling the detection distance.

If a handheld device can detect the presence of an object, then in response to determination that no object is detected, transmission is limited up to a maximum threshold transmission power and in response to determination that an object is detected, transmission is limited up to a reduced maximum threshold transmission power.

Radiated power is a function of distance. The reduced maximum threshold transmission power could be made dependent upon distance between the antenna array 20 and the human tissue. For example, a reduced maximum threshold transmission power can be applied in response to determination that the object detected is within a threshold distance. For example, a reduced maximum threshold transmission power can be dependent upon a determined distance to the object.

A distance to an object may be determined from the correlation of the received signal 40 and the reference 36. The distance introduces a delay to the introduces received signal 40. The distance introduces an attenuation to the introduces received signal 40.

A distance to an object may be determined or estimated by trilateration if a reflected signal 11 is received at spatially diverse reception antennas 20_2.

In some examples, it may be possible to disambiguate human tissue from other proximal objects by considering reflection from the object as being from an object of unknown impedance or by using an additional sensor such as an infrared sensor which will be able to distinguish between a warmer object (user) and colder (non-living) object.

To detect implementation in an apparatus 10, of aspects described above, a reflection 11 of a scheduled transmission signal 14 can be simulated for different proximity of objects (different power). The response of the apparatus 10 to reflection 11 of a scheduled transmission signal 14 can be compared to non-reflection of a scheduled transmission signal 14, reflection of a scheduled transmission signal 14 at a non-proximal distance, and reflection of a non-scheduled signal (random signal). The timing of the simulated reflection signal 11 can be adjusted relative to the scheduled transmitted signal 14.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The apparatus 10 can be a module.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
at least one processor; and
at least one memory including computer program code
the at least one memory and the computer program code configured to, with the at least one processor, cause the apparatus at least to control:
receiving scheduling information for uplink transmission;
performing at least one scheduled uplink transmission according to the scheduling information; controlling content of a power headroom report in dependence upon detection of a reflection of the scheduled uplink transmission; and.
transmitting the power headroom report having content controlled in dependence upon detection of the reflection of the scheduled uplink transmission.

2. An apparatus as claimed in claim 1 comprising:
one or more first antennas and
at least a second antenna different to the one or more first antennas,
wherein the apparatus is configured to:
perform the uplink transmission according to the scheduling information from the one or more first antennas;
detect at the second antenna reflection of the uplink transmission, transmitted according to the scheduling information, and
update the power headroom Report in dependence upon detecting reflection of the uplink transmission.

3. An apparatus as claimed in claim 1 or 2, wherein the power headroom report is configured to indicate an absence of a maximum permissible exposure event trigger in response to determination that no reflected version of the scheduled and transmitted uplink transmission is detected and is configured to indicate an M maximum permissible exposure event trigger in response to determination that a reflected version of the scheduled and transmitted uplink transmission is detected.

4. An apparatus as claimed in any preceding claim, wherein the apparatus is configured to performing at least one uplink transmission according to the scheduling information at a maximum transmit power and is configured to transmit a power headroom report with 0 dB power headroom and no maximum permissible exposure event trigger in response to determination that no reflected version of the scheduled and transmitted uplink transmission is detected at the apparatus and is configured to transmit a power headroom report with an maximum permissible exposure event trigger in response to determination that a reflected version of the scheduled and transmitted uplink transmission is detected at the apparatus.

5. An apparatus as claimed in any preceding claim, wherein the apparatus is configured to detect reflection of the uplink transmission within a time-limited window positioned at a time dependent upon a transmission time of the uplink transmission.

6. An apparatus as claimed in any preceding claim configured to:
determine an expected received signal at a second antenna in dependence upon the uplink transmission, according to the scheduling information, in absence of proximal reflection;
determine an actual received signal at the second antenna in dependence upon the uplink transmission, according to the scheduling information; and
compare the expected signal and the received signal to generate a trigger.

7. An apparatus as claimed in claim 6 wherein the comparison of the expected signal and the received signal is dependent upon amplitude difference between the expected signal and the received signal and is dependent upon phase difference between the expected signal and the received signal.

8. An apparatus as claimed in claim 6 or 7 configured to compare the expected signal and the received signal in the time domain.

9. An apparatus as claimed in claim 6, 7 or 8 configured to determine an expected signal at the second antenna in dependence upon the uplink transmission, according to the scheduling information, in absence of proximal reflection by applying a predetermined transfer function to the uplink transmission.

10. An apparatus as claimed in claim 9 configured to measure the transfer function during a calibration process.

11. An apparatus as claimed in any preceding claim wherein the transmitted power headroom report is
configured to indicate a maximum permissible exposure event trigger when, at a transmission time of the scheduled and transmitted uplink transmission, there is a proximal object present; configured not to indicate a maximum permissible exposure event trigger when, at the transmission time of the scheduled and transmitted uplink transmission, there is no proximal object present.

12. An apparatus as claimed in any preceding claim wherein the apparatus is configured to reduce direct radio path transmission-reception between one or more first antennas used to perform the at least one uplink transmission according to the scheduling information and one or more second antennas, different to the one or more first antennas, used to perform detection of a reflection of the uplink transmission.

13. An apparatus as claimed in any preceding claim, configured as user equipment, wherein a power headroom Report comprises, after detection of a reflection of the uplink transmission, a maximum permissible exposure indicator indicating that the configured power headroom report is a maximum permissible exposure Power Management Maximum Power Reduction (P-MPR) report and comprising an indication of a power backoff applied by the user equipment to meet maximum permissible exposure requirements.

14. A computer program comprising computer program instructions that when run by one or more processors of an apparatus control the apparatus to cause:
storing scheduling information for uplink transmission.
performing at least one scheduled uplink transmission according to the scheduling information;
controlling content of a power headroom report in dependence upon detection of a reflection of the scheduled uplink transmission; and
updating of the power headroom report having content controlled in dependence upon detection of the reflection of the scheduled uplink transmission.

15. A method comprising:
receiving scheduling information for uplink transmission;
performing at least one scheduled uplink transmission according to the scheduling information; controlling content of a power headroom report in dependence upon detection of a reflection of the scheduled uplink transmission; and.
updating the power headroom report having content controlled in dependence upon detection of the reflection of the scheduled uplink transmission.
